Europäisches Patentamt

European Patent Office

Office européen des brevets

(19)

(11) Numéro de publication : **0 161 153 B1**

(12) **FASCICULE DE BREVET EUROPÉEN**

(45) Date de publication du fascicule du brevet :
27.07.88

(21) Numéro de dépôt : 85400651.7

(22) Date de dépôt : 02.04.85

(51) Int. Cl.⁴ : **G 01 M 1/34, F 16 F 15/32,
G 01 C 25/00**

(54) **Rondelle pour l'équilibrage de l'arbre d'un gyroscope.**

(30) Priorité : 02.04.84 FR 8405157

(43) Date de publication de la demande :
13.11.85 Bulletin 85/46

(45) Mention de la délivrance du brevet :
27.07.88 Bulletin 88/30

(84) Etats contractants désignés :
DE GB IT

(56) Documents cités :
DE-B- 1 114 577
IBM TECHNICAL DISCLOSURE BULLETIN, vol. 13,
no. 6, novembre 1970, page 1483, New York, US; P.J.
ENGLES et al.: "Spindle balance brake ring"

(73) Titulaire : **SOCIETE DE FABRICATION D'INSTRU-
MENTS DE MESURE (S.F.I.M.)**
**13, avenue Marcel Ramolfo-Garnier**
**F-91301 Massy (FR)**

(72) Inventeur : **Descourt, Gilles**
**26, rue Appert**
**F-91300 Massy (FR)**
Inventeur : **Noel, Claude**
**85, avenue du Général de Gaulle**
**F-94500 Champigny S/Marne (FR)**

(74) Mandataire : **Schrimpf, Robert et al**
**Cabinet Regimbeau 26, Avenue Kléber**
**F-75116 Paris (FR)**

## Description

L'invention concerne une rondelle à enfiler sur l'arbre d'un gyroscope entraîné par un moteur d'entraînement, cette rondelle comportant un passage central et des parties cassantes constituées par des secteurs prédécoupés de la périphérie de la rondelle à casser à la demande pour équilibrer la ligne d'arbre du gyroscope.

On constate dans la pratique que la mise en place, l'élimination sélective des parties cassantes et le maintien en place de la rondelle, présentent des difficultés et ceci d'autant plus que la rondelle doit être utilisée sur un gyroscope de faible encombrement. On a pensé faciliter cette élimination par une conformation en biais du bord de l'arbre contre lequel est disposée la rondelle (IBM Technical Disclosure Bulletin, vol. 13, n° 6, november 1970, page 1483, New York, US), mais ceci nécessite un usinage de l'arbre. La présente invention vise à fournir une rondelle évitant ces inconvénients et particulièrement bien adaptée aux petits gyroscopes.

On y parvient, selon l'invention, par le fait que la rondelle d'équilibrage est en acier à ressort, et par le fait que la rondelle est placée à une extrémité de l'arbre et a une forme légèrement concave au centre et convexe au bord de façon à pouvoir prendre l'une ou l'autre de deux positions sur l'arbre, l'une dans laquelle sa périphérie porte contre le moteur d'entraînement pour le service et l'autre dans laquelle son bord est écarté dudit moteur pour l'enlèvement d'une partie cassante.

On décrira ci-après une rondelle d'équilibrage conforme à l'invention, en référence aux figures du dessin joint sur lequel :

     — la figure 1 est une coupe axiale d'un exemple de gyroscope dont la ligne d'arbre est équilibrée conformément à la présente invention ;

     — la figure 2 est une vue d'un moyen particulier utilisé pour cet équilibrage, et

     — la figure 3 représente les différentes étapes du procédé d'équilibrage.

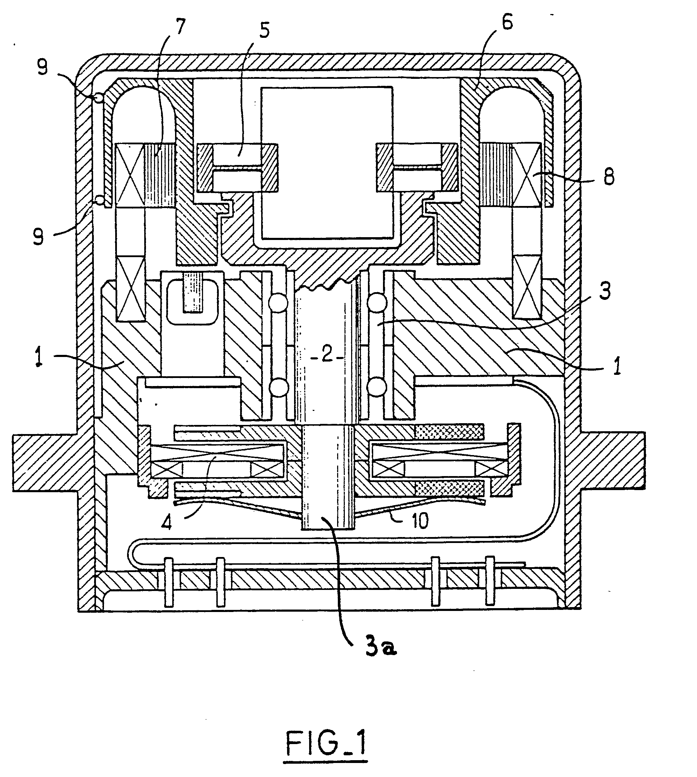

Le gyroscope représenté sur la figure 1 comprend un support 1 définissant un passage central pour un arbre 2 maintenu dans le passage par des roulements précontraints 3. L'arbre est entraîné en rotation à une extrémité 3a par un moteur 4 et, à son autre extrémité, il est articulé par un montage à la cardan 5 à un volant 6 qui se présente dans cet exemple sous la forme d'une cloche à l'intérieur de laquelle a été aménagé un logement en forme de tore à section rectangulaire dans lequel est située une couronne d'aimants 7 fixés au volant en face des bobines de commande 8. Cet ensemble est recouvert par un capot.

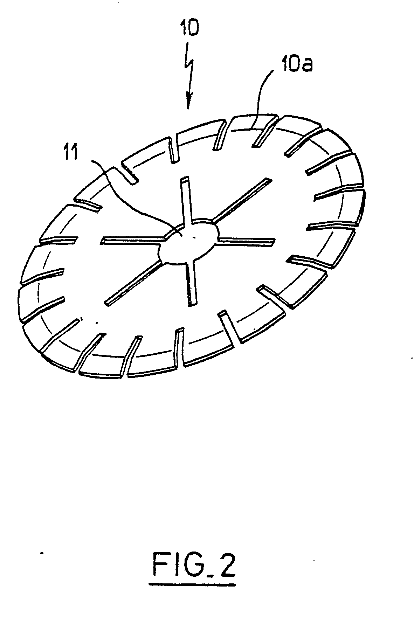

Selon l'invention, on équilibre la ligne d'arbre en mettant en place à l'extrémité 3a de l'arbre une rondelle 10. Cette rondelle 10 ou des parties de la rondelle (figure 2) est réalisée dans un matériau cassant, par exemple un acier à ressort dont la limite élastique et la résistance à la rupture sont rendues très proches grâce à un traitement thermique approprié (« matériau trempé sec »). Une amorce de rupture est obtenue par une diminution localisée de l'épaisseur de la rondelle à l'endroit où l'on veut obtenir la rupture. La rondelle comporte des secteurs cassants 10a prédécoupés pour faciliter l'équilibrage. Elle est munie d'un passage central 11 pour pouvoir être enfilée sur l'arbre. Cette rondelle rappelle les « marguerites » porte-caractères utilisées dans des machines à écrire.

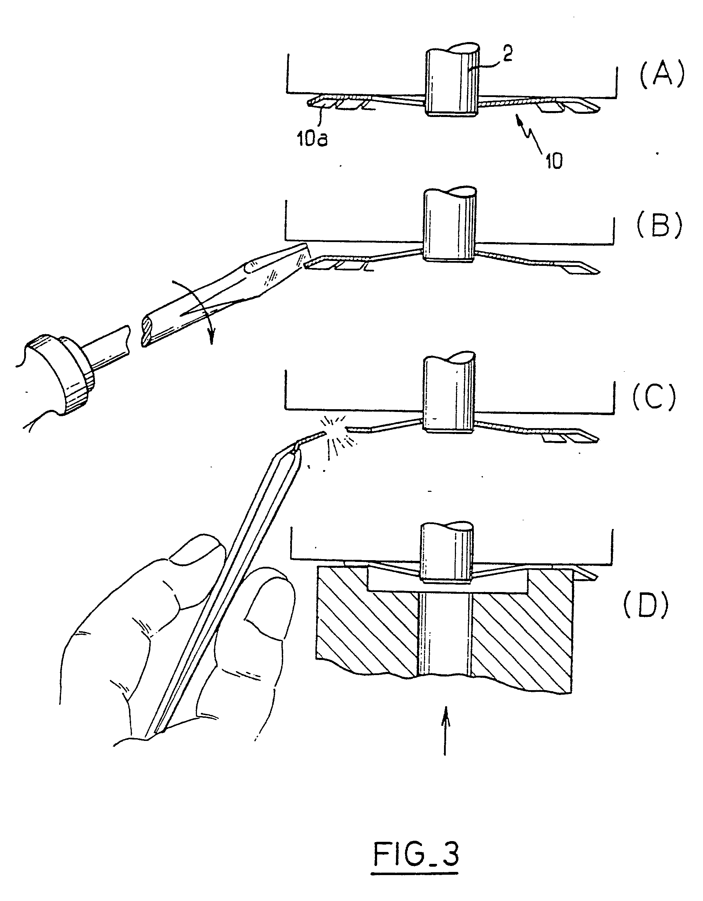

Cette rondelle a une forme légèrement concave au centre et légèrement convexe au bord de façon à pouvoir occuper sur l'arbre deux positions, l'une dans laquelle la périphérie de la rondelle porte contre le moteur d'entraînement 4 du gyroscope, comme représenté sur la figure 3(A), position de service, et l'autre dans laquelle le bord de la rondelle est écarté du moteur, ce qui permet de saisir à la demande tel ou tel secteur pour le casser (figure 3(C)). La rondelle est ensuite remise en position normale par exemple en exerçant une pression sur la rondelle au moyen d'un outil (figure 3(D)) qui vient presser la rondelle dans une zone intermédiaire entre le centre et le bord de la rondelle.

On peut améliorer encore l'équilibrage, si nécessaire, en déplaçant la rondelle sur elle-même par rotation.

L'invention n'est pas limitée à un gyroscope particulier.

## Revendications

1. Rondelle à enfiler sur l'arbre d'un gyroscope entraîné par un moteur d'entraînement (4), cette rondelle comportant un passage central (11) et des parties cassantes (10a) constituées par des secteurs prédécoupés de la périphérie de la rondelle à casser à la demande pour équilibrer la ligne d'arbre du gyroscope, caractérisée en ce que la rondelle (10) est en acier à ressort et en ce que la rondelle (10) est placée à une extrémité (3a) de l'arbre et a une forme légèrement concave au centre et convexe au bord de façon à pouvoir être déformée de manière réversible pour prendre l'une ou l'autre de deux positions sur l'arbre, l'une dans laquelle sa périphérie porte contre le moteur d'entraînement (4) pour le service et l'autre dans laquelle son bord est écarté dudit moteur (4) pour permettre l'enlèvement d'une partie cassante (10a).

2. Rondelle selon la revendication 1, caractérisée en ce que lesdites parties (10a) cassantes sont faites en un matériau dont la limite élastique et la résistance à la rupture sont rendues très proches grâce à un traitement thermique approprié.

3. Les gyroscopes équipés d'une rondelle selon la revendication 1 ou 2.

**Claims**

1. Disc for fitment onto a gyroscope spindle driven by a drive motor (4), the disc consisting of a central bore (11) and frangible parts (10a) comprising pre-cut sectors of the edge of the disc to be broken when required for balancing the line of the gyroscope spindle, characterized in that the disc (10) is made of spring steel and in that the disc (10) is located at one extremity (3a) of the spindle and is shaped slightly concave at the centre and convex at the edge in such a way that it can be reversibly deformed to take up one or the other of two positions on the spindle, one, in which the periphery rests against the drive motor (4), for service and the other, in which its edge is distanced from the said motor (4) for allowing a frangible part (10a) to be removed.

2. Disc according to claim 1, characterized in that the said frangible parts (10a) are made of a material of which the elastic stress-limit and the resistance to breaking are rendered very close by way of an appropriate heat treatment.

3. Gyroscopes equipped with a disc according to claim 1 or 2.

**Patentansprüche**

1. Scheibe, zum Aufsetzen auf eine Achse eines Gyroskops, das von einem Antriebsmotor (4) angetrieben wird, welche Scheibe eine zentrale Ausnehmung (1) und brechbare Teile (10a) umfaßt, die aus vorgeschnittenen Abschnitten des Randes der Scheibe bestehen, zum Abbrechen nach Bedarf, um die Achslinie des Gyroskops auszubalancieren, dadurch gekennzeichnet, daß die Scheibe (10) aus Federstahl ist und daß die Scheibe an einem äußeren Ende der Achse (3a) angeordnet ist und eine Form hat, die innen leicht konkav und am Rand leicht konvex ist, so daß sie reversibel verformt werden kann und entweder die eine oder die andere von zwei Positionen auf der Achse einnehmen kann, die eine, die Betriebsstellung, in der ihr Rand gegen den Antriebsmotor (4) anliegt, und die andere, in der ihr Rand von dem genannten Motor (4) abgerückt ist, um die Wegnahme des brechbaren Teils (10a) zu ermöglichen.

2. Scheibe nach Anspruch 1, dadurch gekennzeichnet, daß die genannten brechbaren Teile (10a) aus einem Material bestehen, dessen Elastizitätsgrenze und Bruchfestigkeit dank einer angemessenen Wärmebehandlung sehr nah beieinander liegen.

3. Gyroskop mit einer Scheibe nach Anspruch 1 oder 2.

## FIG_1

## FIG. 2

(A)

(B)

(C)

(D)

FIG_3